# EUROPÄISCHE PATENTANMELDUNG

(11) **EP 2 395 320 A1**
(43) Veröffentlichungstag der Anmeldung: **14.12.2011**
(21) Anmeldenummer: 11004657.0
(22) Anmeldetag: 08.06.2011
(51) Int. Cl.: G01B 21/32, F03D 11/00

(54) **Messvorrichtung zum Messen von Verformungen elastisch verformbarer Objekte**

(30) Priorität: 09.06.2010 DE 102010023250
(71) Anmelder: Baumer Innotec AG, 8501 Frauenfeld (CH)
(72) Erfinder: Tarraf, Amer, Dr., 8280 Kreuzlingen (CH); Tledeke, Joachim, 8280 Kreuzlingen (CH); Kluser, Christoph, 9500 Will (CH)
(74) Vertreter: Strauss, Steffen

(57) **Zusammenfassung**

Die Erfindung betrifft eine Einrichtung und ein Verfahren zur Messung von Verformungen eines elastisch verformbaren Objekts umfassend zumindest eine optisch erfassbare Markierung an einer Längsposition entlang des elastisch verformbaren Objekts, sowie zumindest eine elektronische Kamera mit einem Objektiv und einem Matrix-Sensor, wobei das Objektiv der Kamera auf die zumindest eine optisch erfassbare Markierung gerichtet ist, wobei die Markierung mittels einer Beleuchtungseinrichtung beleuchtet wird oder mittels einer Beleuchtungseinrichtung selbstleuchtend ist und wobei für die Beleuchtungseinrichtung eine Stromversorgung vorgesehen ist, wobei die Stromversorgung einen autarken Generator umfasst, welcher Energie aus der Umgebung des Generators in elektrische Energie wandelt.

## Beschreibung

Die Erfindung betrifft allgemein die Messung elastischer Verformungen. Insbesondere betrifft die Erfindung die Messung von Verformungen eines Objekts, wie etwa eines langgestreckten Trägers, beispielsweise eines rotierenden Windmühlenflügels oder einer Tragfläche.

Um Verformungen von Trägerelementen festzustellen, sind insbesondere Dehnungsmessstreifen (DMS) bekannt.

Mit diesen Streifen können dehnende Verformungen erfasst werden. Sie bilden vielfach die Messeinrichtung von Waagen aller Größenordnungen, von Haushaltswaagen bis hin zu Kranwaagen. Auch Verformungsmessungen im Stahlbau können ebenfalls durch DMS-Messungen realisiert werden. Um die Verformung anhand der Widerstandsänderung des DMS zu messen, werden in der Regel Brückenschaltungen, wie etwa eine Wheatstone - Brücke eingesetzt. Die mechanische Kopplung des DMS erfolgt typischerweise durch Aufkleben.

Auch wenn die mit DMS durchgeführten Messungen von hoher Genauigkeit sind, bestehen dennoch einige Nachteile. Sind die Strukturen an welchen die Verformung gemessen werden soll, sehr lang und die Verformung selbst relativ klein, müsste für eine zuverlässige Messung ein sehr langer Dehnungsmessstreifen eingesetzt werden. Damit steigen der apparative Aufwand, sowie das Gewicht. Es muss ausserdem sichergestellt werden, dass die Verbindung des elastischen Trägers zum DMS langzeitstabil erhalten bleibt. Dieses jedoch kann in widriger Umgebung wie beispielsweise in Windkraftanlagen, die sowohl starker Sonneneinwirkung wie auch Frost ausgesetzt sind und sowohl in feuchter, eisbildender Umgebung als auch in sehr trockener Atmosphäre betrieben werden, sehr schwierig sein.

Zudem kann bei einer dauerhaften Änderung der Widerstandsparameter nicht darauf geschlossen werden, ob etwa eine dauerhafte Verformung des eigentlichen Trägers oder eventuell eine alterungsbedingte Änderung der Widerstandswerte des DMS oder der Brückenschaltung ursächlich sind.

In der DE10 2009 007 938 A1 ist eine Vorrichtung zur Messung von Verformungen einer elastischen langgestreckten Trägerstruktur offenbart, bei das Objektiv einer Kamera auf zumindest eine optisch erfassbare Markierung gerichtet und die Markierung auf einen Matrix-Sensor abgebildet wird. Die auf die Markierung blickende Kamera führt die Bilddaten einer Bildverarbeitungsvorrichtung zu, wobei die Bildverarbeitungsvorrichtung eine Bilderkennung durchführt, so dass die Position der Markierung innerhalb des Bildfelds ermittelt wird, und mittels einer Recheneinrichtung eine Abweichung der Position der Markierung von zumindest einem Sollwert ermittelt und anhand der Position der Markierung innerhalb des Bildfelds quantifiziert wird.

Bildgebende Verfahren haben jedoch generell für eine Fehlerbewertung kritische Eigenschaften. So kann beispielsweise bei einem Bildvergleich zur Ermittlung von Verformungen oder Beschädigungen der Trägerstruktur eine dem Prüfling anhaftende Verschmutzung das Prüfungsergebnis nachteilig beeinflussen. Die Verschmutzung kann bei einem Bildvergleich beispielsweise als Verformung erkannt werden.

Es kann sich auch als äußerst schwierig herausstellen, Risse oder durch Delamination erzeugte Oberflächenschäden, wie diese beispielsweise an den Flügeln von Windkraftanlagen auftreten können, von oberflächlichen Verschmutzungen zu unterscheiden. Ferner können durch anhaftende Verschmutzungen Formänderungen im aufgezeichneten Bild auftreten, die ebenfalls eine weit über die tatsächliche Verformung hinausgehende Deformation vortäuschen. Hierdurch können nachfolgende Sicherheitseinrichtungen vorzeitig zu einer Abschaltung eines an sich noch funktionstüchtigen Geräts veranlasst werden.

Gerade bei selbsttätig arbeitenden Anlagen im Außenbetrieb wie insbesondere bei Windkraft-Anlagen besteht insbesondere der Wunsch, die Anlage möglichst wartungsfrei und störunanfällig zu halten und dennoch die Betriebssicherheit zu gewährleisten.

Der Erfindung liegt daher die Aufgabe zugrunde, die vorstehend genannten Probleme, insbesondere auch für längere Messstrecken und insbesondere auch an rotierenden Körpern zu lösen oder zumindest zu mildern.

Diese Aufgabe wird durch den Gegenstand der unabhängigen Ansprüche gelöst. Vorteilhafte Ausgestaltungen und Weiterbildungen der Erfindung sind in den jeweiligen abhängigen Ansprüchen angegeben.

Dazu ist eine Einrichtung zur Messung von Verformungen eines elastisch verformbaren Objekts, vorzugsweise einer langgestreckten Trägerstruktur vorgesehen, umfassend zumindest eine optisch erfassbare Markierung an einer Längsposition entlang des elastisch verformbaren Objekts, sowie zumindest eine elektronische Kamera mit einem Objektiv und einem Matrix-Sensor, wobei das Objektiv der Kamera auf die zumindest eine optisch erfassbare Markierung gerichtet ist, wobei die Markierung mittels einer Beleuchtungseinrichtung beleuchtet wird oder mittels einer Beleuchtungseinrichtung selbstleuchtend ist, und wobei eine Stromversorgung für die Beleuchtungseinrichtung vorgesehen ist, wobei die Stromversorgung einen autarken Generator umfasst, welcher Energie aus der Umgebung des Generators in elektrische Energie wandelt. Vorzugsweise ist neben dem autarken Generator ein Speicher für elektrische Energie vorgesehen, um eine gleichbleibende Versorgung mit elektrischer Leistung zu gewährleisten. Ein solcher Speicher kann ein Akkumulator oder gegebenenfalls auch ein Kondensator hinreichender Kapazität sein.

Vorzugsweise ist die Markierung innerhalb eines Hohlraumes des elastisch verformbaren Objekts angeordnet. Die Anordnung der Markierung im Inneren der Trägerstruktur schützt die Einrichtung vor Umgebungseinflüssen. Das Problem, dass hier im Allgemeinen aber nur wenig Umgebungslicht zur Verfügung steht, wird wiederum durch die Beleuchtungseinrichtung gelöst.

Die Markierung kann aber auch auf dem elastisch verformbaren Objekt angeordnet sein.

Das entsprechende Verfahren zur Messung von Verformungen eines elastisch verformbaren Objekts, insbesondere einer elastischen, langgestreckten Trägerstruktur basiert entsprechend darauf, zumindest eine optisch erfassbare Markierung an einer Längsposition entlang des elastisch verformbaren Objekts, sowie zumindest eine elektronische Kamera mit einem Objektiv und einem Matrix-Sensor zu verwenden, wobei das Objektiv der Kamera auf die zumindest eine optisch erfassbare Markierung gerichtet ist, wobei die Markierung mittels einer Beleuchtungseinrichtung beleuchtet wird oder selbstleuchtend ist, und wobei die Beleuchtungseinrichtung mittels einer Stromversorgung betrieben wird, wobei die elektrische Energie der Stromversorgung mit einem autarken Generator erzeugt wird, welcher Energie aus der Umgebung des Generators in elektrische Energie wandelt.

Mit der Erfindung wird eine einfache Montage der beleuchteten oder selbstleuchtenden Markierung geschaffen, die unabhängig von externen Stromquellen ist. Es sind mit der erfindungsgemässen Einrichtung keine zusätzlichen Kabel zum Anschluss an ein Stromversorgungsnetz zur Versorgung der Beleuchtung notwendig. Neben der damit wesentlich vereinfachten Montage bietet sich hier auch der Vorteil einer hohen Betriebssicherheit, da die Beleuchtungseinrichtung auch bei einem Stromausfall in Betrieb bleibt.

Weiterhin können vorteilhaft auch andere Elemente der Einrichtung durch den autarken Generator betrieben werden. Gedacht ist hier besonders auch an die Kamera, beziehungsweise den Sensor zur Erfassung der Markierung.

Der autarke Generator kann zumindest eine der folgenden, besonders zur Verwendung im Inneren der Trägerstruktur geeigneten Einrichtungen umfassen:
- einen Wandler von Vibrationsenergie in elektrische Energie, vorzugsweise ein piezoelektrischer Wandler,
- einen Wandler elektromagnetischer Wellen, wie Funk- oder Radiowellen in elektrischen Strom, vorzugsweise mit einer an den Wandler angeschlossenen Antenne zum Empfang der elektromagnetischen Wellen,
- einen dynamoelektrischen Wandler, vorzugsweise mit einem Trägheitselement oder einem durch die Schwerkraft ausgerichteten Element. Neben diesen Einrichtungen sind je nach Anordnung auch Generatoren mit anderen Wandlerprinzipien zur Erzeugung von elektrischer Energie möglich.

Mit der erfindungsgemässen Einrichtung können mittels der beleuchteten oder selbstleuchtenden Markierung kurzzeitige Beeinträchtigungen der Messungen von Verformungen, wie beispielsweise durch Reif- oder Eisbildung, kompensiert werden. Damit kann die Zuverlässigkeit von Windkraftanlagen erhöht werden. Zudem kann erfindungsgemäss die elektrische Versorgung der Beleuchtungseinrichtungen unabhängig von einem Stromnetz erfolgen, wodurch insbesondere Windkraftanlagen in abseits gelegenen Gebieten oder off-shore errichteten Anlagen kostengünstiger installiert werden können.

In einer weiter bevorzugter Ausgestaltung der Erfindung wird die Kamera an einer von einer ersten Längsposition in Längsrichtung beabstandeten zweiten Längsposition angeordnet. Ebenso ist es möglich, die Kamera außerhalb des elastisch verformbaren Objekts anzuordnen. Auch in diesem Fall blickt die Kamera vorzugsweise in Längsrichtung entlang des Objekts, wie insbesondere einer langgestreckten Trägerstruktur auf die Markierung. Dies kann in einfacher Weise durch eine Anordnung in Verlängerung der Längsrichtung der Trägerstruktur oder auch durch ein optisches Umlenkelement im Strahlengang, wie etwa einem Spiegel oder einem Prisma realisiert werden.

Insbesondere ist es günstig, bereits vorhandene Hohlräume im Objekt auszunutzen, indem die Markierung innerhalb eines solchen bereits vorhandenen Hohlraumes angeordnet ist. Derartige Hohlräume sind insbesondere bei langgestreckten Trägerstrukturen oft von vorneherein vorgesehen. Beispielsweise sind verschiedene Träger, wie etwa rohr- oder schachtförmige Träger innen hohl. Es ist dann im Allgemeinen zweckmäßig, die Markierung mittels einer Beleuchtungseinrichtung zu beleuchten.

Mit der Erfindung ist es insbesondere auch in sehr einfacher Weise möglich, Verformungen in allen Raumrichtungen zu verfolgen und zu quantifizieren. Dies kann erreicht werden, indem zumindest zwei entlang der Längsrichtung in unterschiedlichem Abstand von der Kamera beabstandete Markierungen vorgesehen werden, wobei die Recheneinrichtung eingerichtet ist, anhand eines Vergleichs der Positionen der beiden Markierungen eine Längenänderung oder eine ungleichmäßige Deformation der Trägerstruktur oder eines anderen Objekts zu ermitteln und zu quantifizieren.

Eine solche ungleichmäßige Deformation kann durch die Messung der Deformation in zwei Distanzen erfolgen. Liegt eine normale Deformation, wie beispielsweise eine Durchbiegung vor, dann liegen beide Markierungen auf oder in der Nähe einer Sollkurve. Eine Abweichung der Position der Markierungen von der der Struktur her bekannten Krümmungskurve, kann beispielsweise durch eine Knickstelle oder eine lokale Schwächung der Struktur hervorgerufen werden. Wird eine solche Abweichung detektiert, kann beispielsweise ein Warnsignal generiert oder die Vorrichtung mit dem Träger oder einem anderen elastisch verformbaren Objekt abgeschaltet, beziehungsweise in einen sicheren Zustand gefahren werden.

Nachfolgend wird die Erfindung in Bezug auf die Verformung eines verformbaren, bevorzugt eines elastisch verformbaren Trägers beschrieben. Die Erfindung kann in gleicher Weise dabei jeweils auch auf andere elastisch verformbare Objekte angewendet werden.

Um die in verschiedenen Distanzen angeordneten Markierungen unterscheiden zu können, könnten unterschiedliche "Farben" (Wellenlängen der Reflektion) oder Einbaurichtungen sein.

Es können beispielsweise mit zwei farblich verschiedenen, beleuchteten oder in zwei verschiedenen Farben selbstleuchtenden Markierungen, die benachbart angeordnet sind, in den jeweiligen Farbbereichen Winkel gemessen werden. In Weiterbildung der Erfindung auch ohne, dass im Wesentlichen ortsaufgelöste Bildinformationen ausgewertet werden müssen. Hierdurch können außer reinen Deformationen mit diesen beiden Winkeln der verschiedenen Farbbereiche auch Drehungen oder Ausdehnungen oder Stauchungen erfasst werden. Wenn unterschiedliche Farben verwendet werden, können diese durch eine Farbkamera oder durch unterschiedliche Beleuchtungen unterschieden werden. Eine Kodierung verschiedener Markierungen kann in vorteilhafter Weise auch durch einen oder mehrere wellenlängenselektive Filter, wie insbesondere Farbfilter auf den Markierungen realisiert werden. Dann können in Weiterbildung der Erfindung zu unterschiedlichen Zeiten die verschiedenen Markierungen mit unterschiedlichen Wellenlängen beleuchtet und selektiv ausgewertet werden, beispielsweise durch farbige Blitze mit hoher Frequenz im Verhältnis zu einer Umdrehungsfrequenz eines rotierenden Körpers.

Es können in Weiterbildung der Erfindung auch mehr als zwei in verschiedenen Distanzen zur Kamera angeordnete, beleuchtete oder selbstleuchtende Markierungen verwendet werden. Beispielsweise können mehrere von der Beleuchtungseinrichtung angestrahlte Reflektoren oder von der Stromversorgung betriebene Leuchtelemente hintereinander angeordnet und mit der Kamera in einer Achse oder unter Winkel betrachtet werden, wobei die laterale und/oder axiale Verschiebung ausgewertet wird.

Weiterhin ist es auch möglich, eine Torsion der Trägerstruktur um deren Längsachse zu ermitteln. Dazu wird in Weiterbildung der Erfindung eine beleuchtete oder selbstleuchtende Markierung mit zumindest zwei lateral zur Betrachtungsrichtung, vorzugsweise farblich verschiedenen, beabstandeten Markierungselementen verwendet, wobei anhand einer Rotation der Markierungselemente in der Bildebene eine Torsion der elastischen, langgestreckten Trägerstruktur ermittelt und quantifiziert wird. Aufgrund der Torsion drehen sich die Markierungselemente um einen Drehpunkt in der Bildebene. Der Drehpunkt muss dabei nicht selbst innerhalb des Bildfeldes liegen. Allerdings führt die Torsion dann dennoch zu einer Änderung des Winkels der die beiden Elemente verbindenden Strecke.

Eine geeignete Beleuchtung der Markierung kann durch einen Laser realisiert werden, indem der Laser parallel zur Betrachtungsrichtung der Kamera auf die Markierung ausgerichtet ist. Eine günstige, platzsparende Möglichkeit ist beispielsweise, den Laser mittels eines Strahlteilers paraxial zur Blickrichtung der Kamera einzukoppeln. Die Einkopplung kann auch innerhalb des Objektivs, beziehungsweise innerhalb der Kamera erfolgen. Ferner kann zur Beleuchtung der Markierung wenigstens eine LED vorgesehen werden.

Vorzugsweise wird die Erfindung zur Ermittlung von Verformungen auf längere Distanzen hinweg eingesetzt. Die Länge des optischen Pfades zwischen dem Matrix-Sensor und der Markierung kann zumindest 4 Meter, vorzugsweise zumindest 6 Meter betragen. Wird die erfindungsgemäße Messeinrichtung im Inneren einer Trägerstruktur eingebaut, wird der Abstand zwischen der Markierung und der Kamera, beziehungsweise allgemeiner die Länge des optischen Pfades entlang der Längsrichtung der Trägerstruktur im wesentlichen nur dadurch begrenzt, dass die Markierung durch eine Durchbiegung der begrenzenden Wandungen abgeschattet wird.

Mit der Erfindung kann insbesondere auch eine Regelung aufgebaut werden, mit welcher Verformungen der Trägerstruktur entgegengewirkt wird. Dazu ist eine Regeleinrichtung mit einer erfindungsgemäßen Einrichtung zur Messung von Verformungen vorgesehen, wobei die Regeleinrichtung eine Stelleinrichtung mit zumindest einem Stellglied umfasst, mit welcher unter Ansprechen darauf, dass von der Recheneinrichtung eine Abweichung der Markierung quantifiziert wurde, der elastischen Verformung entgegengewirkt wird.

Ein Einstellen kann insbesondere davon abhängig gemacht werden, dass die Deformation einen vordefinierten Grenzwert überschreitet oder erreicht.

Gemäß einem weiteren Aspekt der Erfindung ist ein aerodynamischer Flügel vorgesehen, welcher eine wie hierin beschriebene Einrichtung zur Messung von Verformungen aufweist, sowie einen Rotor einer Windkraftanlage, wobei der Rotor einen solchen aerodynamischen Flügel umfasst. Dabei ist es günstig, zumindest die Markierung der Messeinrichtung im Inneren des Flügels anzuordnen und eine aktive Beleuchtung der Markierung oder sogar eine selbstleuchtende Markierung vorzusehen.

Die Kamera kann im Flügel, beziehungsweise Rotorblatt selbst untergebracht sein. Es bietet sich aber auch an, die Kamera in der Rotornabe anzuordnen. Damit können elektrische, beziehungsweise elektronische Elemente innerhalb des Rotorblatts vermieden werden.

Alternativ oder zusätzlich kann die Erfindung auch im Turm der Windkraftanlage, welcher den Rotor trägt, eingesetzt werden.

Die Erfindung kann hier in besonders vorteilhafter Weise zusammen mit einer wie oben beschriebenen Regeleinrichtung eingesetzt werden, wobei das Stellglied ein Stellglied zur Einstellung des Anstellwinkels umfasst, und wobei die Stelleinrichtung den Anstellwinkel des Rotorblatts ändert. Auch kann allgemein der Auftrieb des Flügels mittels einer oder mehrerer Stellglieder geändert werden. Gedacht ist hierbei besonders auch an die Klappen an den Tragflächen eines Flugzeugs.

Um eine exakte Quantifizierung einer Verformung anhand der Position der Markierung im Bildfeld der Kamera vornehmen zu können, ist die Kenntnis des Abstands der Markierung zur Kamera wertvoll. Im einfachsten Fall wird die Markierung in definiertem Abstand an der Trägerstruktur angebracht. Es ist aber auch möglich, die Messeinrichtung selbstkalibrierend auszugestalten. Dazu ist gemäß einer Ausführungsform der Erfindung vorgesehen, dass die Länge des optischen Pfades vom Matrix-Sensor zur Markierung durch eine Laufzeit-Messung eines Lichtstrahls oder anhand der Größe eines auf die Markierung projizierten Musters bestimmt wird.

In einfachster Ausprägung der Erfindung, kann die Markierung durch zur Umgebung der Markierung kontrastierende, von der Beleuchtungseinrichtung beleuchtete oder durch die Beleuchtungseinrichtung selbstleuchtende Punkte oder Streifen oder ähnliche Strukturen gegeben sein.

Aufgrund der erfindungsgemäßen Einrichtung ist dabei die Form der Markierung im Wesentlichen ohne Einfluss, solange diese einen entsprechenden Kontrast aufweist.

Generell kann die Erfindung dazu benutzt werden, die Funktionalität einer Trägerstruktur, wie etwa eines Rotorflügels einer Windkraftanlage zu überwachen, steuern und/oder regeln.

Die Erfindung wird nachfolgend anhand von Ausführungsbeispielen und unter Bezugnahme auf die beigeschlossenen Zeichnungen näher erläutert. Dabei verweisen gleiche Bezugszeichen auf gleiche oder entsprechende Elemente.

Es zeigen:
- Fig. 1: eine Ansicht eines Rotors einer Windkraftanlage mit Teilen einer Einrichtung zur Messung von Verformungen eines Flügels der Windkraftanlage,
- Fig. 2: einen Querschnitt durch einen Flügel,
- Fig. 3: eine Kamera der Messeinrichtung,
- Fig. 4: ein schematisches Kamerabild,
- Fig. 5: eine Variante des Rotors 1 aus Fig. 1,
- Fig. 6: ein Beispiel, wie anhand eines Vergleiches der Position von zwei Markierungen eine ungleichmäßige Verformung der Flügel bestimmt werden kann,
- Fig. 7: eine schematische Darstellung eines autarken Generators umfassend einen piezoelektrischen Wandler,

- Fig. 8: eine schematische Darstellung eines autarken Generators umfassend einen Wandler für elektromagnetische Wellen und
- Fig. 9: eine schematische Darstellung eines autarken Generators umfassend einen dynamoelektrischen Wandler,

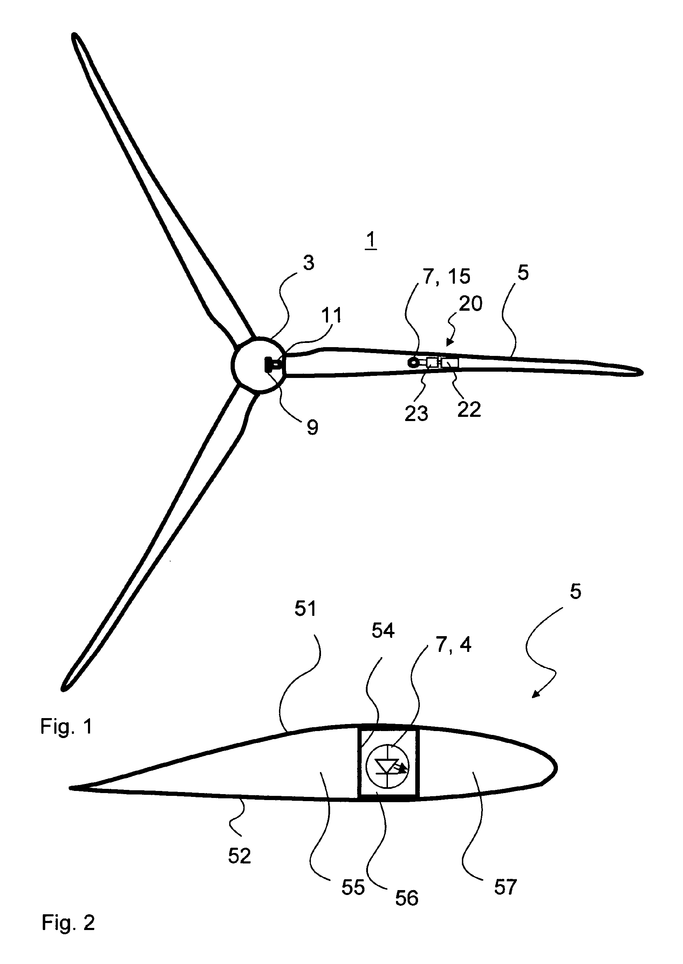

Fig. 1 zeigt einen erfindungsgemäßen Rotor 1 einer Windkraftanlage mit drei Flügeln 5.

Jeder der Flügel 5 bildet eine elastisch verformbare Trägerstruktur. Der Rotor 1 beherbergt Teile einer Einrichtung zur Messung von Verformungen der Flügel 5, deren Prinzip nachfolgend erläutert wird. Dabei wurde die Einrichtung zur Messung von Verformungen nur an einem Flügel 5 dargestellt.

Die Aufgabe der Messvorrichtung besteht darin, die Durchbiegung des Flügels 5 der Windkraftanlage in zwei Achsen zu messen. Dazu ist eine Kamera 9 in eine Nabe 3 des Rotors 1 eingebaut. Die Nabe 3 des Rotors 1 kann gegenüber den Flügeln 5 leichter gegenüber einem Blitzeinschlag abgeschirmt werden, so dass die Kamera 9 vor einem blitzschlagbedingtem Ausfall geschützt wird. Die Kamera 9 kann aber auch an oder in dem Flügel 5 vorgesehen sein. Der Kamera 9 ist ein Objektiv 11 vorgeschaltet. Alternativ kann das Objektiv 11 auch in der Kamera 9 integriert sein. Auf oder in dem Flügel 5 ist eine Markierung 7 vorgesehen. Kommt es bedingt durch den anströmenden Wind im Betrieb zu einer Verformung des Flügels 5, bewegt sich die Position der Markierung 7 seitlich gegenüber einer Längsachse 13 des Flügels 5. Die Längsachse 13 stellt auch die Blickrichtung der Kamera 9 dar. Damit verschiebt sich die Position der Abbildung der Markierung 7 auf einem Matrix-Sensor der Kamera 9. Ist der Abstand der Kamera 9 zur Markierung 7 bekannt, kann aus der Verschiebung eine Verformung des Flügels 5 berechnet werden.

Der Abstand des Matrix-Sensors der Kamera 9 zur der Markierung 7 beträgt vorzugsweise 4 Meter, besonders bevorzugt 6 Meter. In dieser Ausführung kann eine Verformung des Flügels 5 mit einer hoher Genauigkeit gemessen werden. Ferner sollte der Abstand nicht größer als 40 Meter betragen, da ansonsten der Flügel 5 bei auftretenden Belastungen schnell so weit verbiegen kann, dass die Markierung 7 nicht mehr im Bildfeld der Kamera 9 liegt, sondern durch die gekrümmten Wände des Flügels 5 verdeckt wird.

Wie anhand von Fig. 1 weiter zu erkennen ist, ist vorzugsweise entlang der Längsachse 13 hinter der Markierung 7 eine Stromversorgung 20 angeordnet. Die Stromversorgung 20 speist ein Leuchtmittel 15, welches als Markierung 7 dient. Diese umfasst einen autarken Generator 22, sowie einen zur Zwischenspeicherung der elektrischen Energie dienenden elektrischen Speicher 23. Der elektrische Speicher 23 ist an das Leuchtmittel 15 angeschlossen. Der elektrische Speicher 23 wird durch den autarken Generator 22 aufgeladen.

Eine Bildverarbeitungsvorrichtung und eine Recheneinrichtung sind in Fig. 1 nicht explizit dargestellt. Allerdings können diese Einrichtungen auch in der Kamera 9 integriert sein, so dass die Kamera 9 an einem Ausgang bereits die Daten der Abweichung von einer Sollposition des Flügels 5, beispielsweise der Position des ruhenden Flügels 5 bei Windstille ausgibt.

Besonders bevorzugt kann allgemein eine Regeleinrichtung vorgesehen werden, mit welcher den Verformungen entgegengewirkt werden kann. Die Regeleinrichtung umfasst dazu eine Stelleinrichtung mit zumindest einem Stellglied, mit welcher unter Ansprechen darauf, dass von der Recheneinrichtung eine Abweichung der Markierung 7 von einer Sollposition, insbesondere die Überschreitung eines Grenzwerts quantifiziert wurde, der elastischen Verformung entgegengewirkt wird. Im Falle des in Fig. 1 gezeigten Rotors 1 wird dabei ein Stellglied zur Einstellung des Anstellwinkels der Flügel 5 verwendet, so dass die Stelleinrichtung den Anstellwinkel des Flügels 5 in Abhängigkeit von der gemessenen Verformung ändert.

Fig. 2 zeigt einen Querschnitt durch den Flügel 5. Typischerweise umfassen Flügel 5 von Windkraftanlagen, sowie auch andere aerodynamische Flügel, wie insbesondere auch Flugzeugflügel entlang ihrer Längsachse 13 verlaufende Hohlräume 56. Bei dem in Fig. 2 gezeigten Beispiel umfasst der Flügel 5 eine Oberschale 51 und eine Unterschale 52, zwischen denen ein Holm 54 angeordnet ist. Innerhalb des Holmes 54 erstreckt sich ein schachtförmiger Hohlraum 56. Auch die weiteren Zwischenräume 55 und 57 können hohl sein. Es ist nun zweckmäßig, dass wie in Fig. 2 gezeigt, zumindest die Markierung 7 der Messeinrichtung im Inneren des Flügels 5 angeordnet ist. Beispielhaft ist in Fig. 2 die Markierung 7 im Holm 54 im schachtförmigen Hohlraum 56 eingesetzt.

Damit die Kamera 9 die Markierung 7 erfassen kann, ist erfindungsgemäß eine aktive Beleuchtung der Markierung 7 vorgesehen. Dazu wird die im Hohlraum 56, hier speziell dem Holm 54 des Flügels 5 angeordnete Markierung 7 mittels einer Beleuchtungseinrichtung 4 beleuchtet, oder ist unter Verwendung eines Leuchtmittels 15 selbstleuchtend. Fig. 2 zeigt die Variante einer selbstleuchtenden Markierung 7. Dazu ist die Markierung als Leuchtmittel 15 ausgeführt. Vorzugsweise wird ein energieeffizientes Leuchtmittel 15, wie beispielsweise eine Leuchtdiode verwendet.

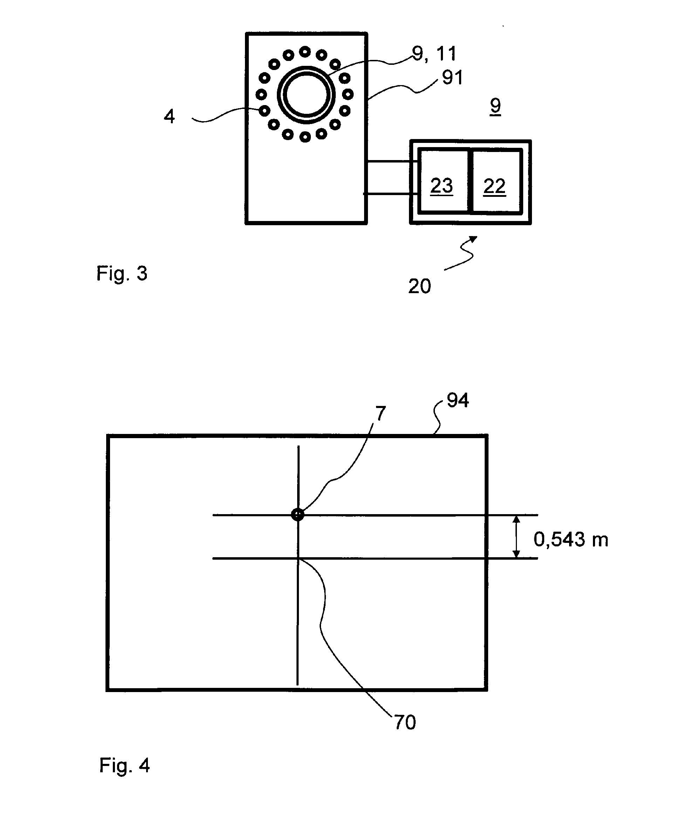

Fig. 3 zeigt ein weiteres Beispiel. Hier beleuchtet die Beleuchtungseinrichtung 4 die Markierung 7. Im Speziellen ist eine Kamera 9 mit der Beleuchtungseinrichtung 4 vorgesehen. Bei diesem Beispiel sind um das Objektiv 11 herum am Gehäuse 91 der Kamera 9 Leuchtdioden vorgesehen, welche Objekte entlang der Längsachse 13 des Flügels 5 beleuchten. Um einen hohen Kontrast in den aufgenommenen Bildern zu erhalten ist es dann weiterhin günstig, die Markierung 7 als Reflektor auszubilden. Dazu kann eine Reflektorfolie oder eine Markierung 7 in Form eines Katzenauges verwendet werden. Da die Beleuchtungseinrichtung 4 hier in die Kamera 9 integriert oder allgemein in der Nähe der Kamera 9 angeordnet ist, bietet es sich an auch die Kamera 9 mit dem Strom der Stromversorgung 20 zu betreiben.

Fig. 4 zeigt schematisch ein Kamerabild 94 aus einer im Betrieb typischerweise aufgenommenen Bildsequenz. Im Kamerabild 94 zu erkennen ist die beleuchtete oder selbstleuchtende Markierung 7, die gegenüber einer Referenzposition 70 verschoben ist. Die Kamera 9 und die Beleuchtungseinrichtung 4 wird so gesteuert oder eingestellt, dass das Lichtsignal des Reflektors die Kamera 9 gut aussteuert, vorzugsweise aber nicht übersteuert. Es erfolgt eine Schwerpunktbestimmung des Reflektorbilds. Mit den bekannten Eigenschaften des Objektivs 11 der Kamera 9 wird die Auslenkung des Lichtflecks gegenüber der Referenzposition 70 in zwei Richtungen bestimmt. Im Falle eines Flügels 5 stellt die Referenzposition 70 vorzugsweise die Position der Markierung 7 bei Windstille dar, bei welcher keine wesentlichen Kräfte abgesehen von denen durch das Eigengewicht verursachten Momenten auf den Flügel 5 einwirken. Aus dem kalibrierten Abstand der Markierung 7 zur Kamera 9 und dem Versatz der Markierung 7 zur Referenzposition 70 errechnet sich aus dieser Aufnahme eine Verformung um 0,543 Metern.

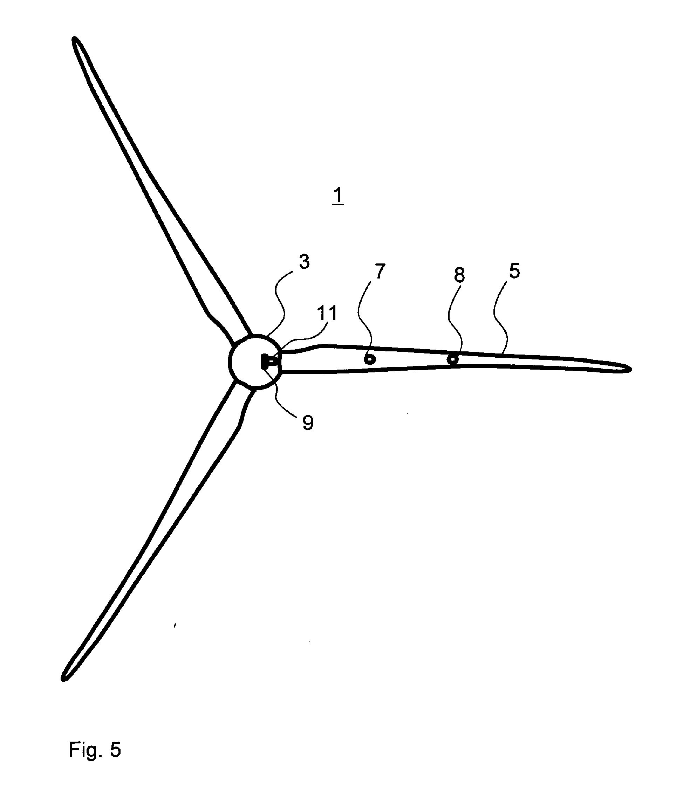

Fig. 5 zeigt eine Variante des Rotors 1 aus Fig. 1. Bei dieser Variante sind zwei entlang der Längsachse 13 des Flügels 5 in unterschiedlichem Abstand von der Kamera 9 beabstandete Markierungen 7, 8 vorgesehen. Anhand der Position dieser Markierungen 7, 8 ist es dann auch möglich, eine ungleichmäßige Verformung des Flügels 5 zu ermitteln und zu quantifizieren.

Außerdem können die Markierungen 7, 8 jeweils zwei oder mehrere lateral zur Längsachse 13 beabstandete Markierungselemente umfassen (nicht dargestellt). Dann kann auch anhand einer Rotation der Markierungselemente in der Bildebene eine Torsion der elastischen, langgestreckten Trägerstruktur, beziehungsweise im Beispiel der Fig. 5 eine Torsion des Flügels 5 ermittelt und quantifiziert werden.

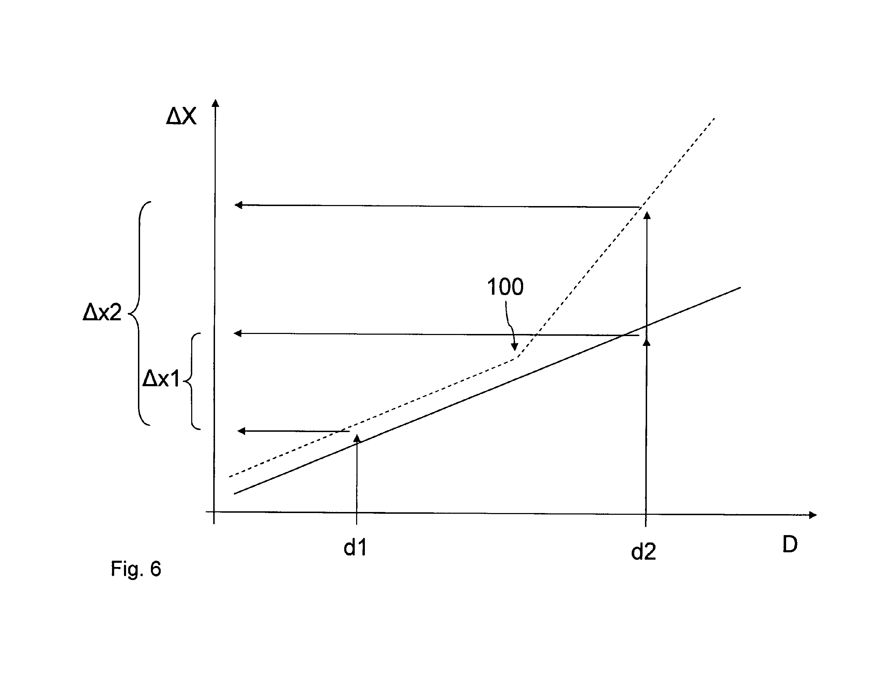

Fig. 6 zeigt ein Beispiel, wie anhand eines Vergleichs der Positionen der beiden Markierungen 7 und 8 eine ungleichmäßige Verformung der Trägerstruktur, hier im Speziellen einer ungleichmäßigen Durchbiegung des Flügels 5 ermittelt und quantifiziert werden kann.

In Fig. 6 sind Diagramme der Auslenkung Δx des Flügels in Abhängigkeit vom Abstand D zur Nabe dargestellt. Die Markierung 7 ist an der Position d1 und die Markierung 8 an der Position d2 angeordnet.

Die durchgezogene Kurve zeigt beispielhaft eine normale, gleichmässige Durchbiegung eines intakten Flügels 5. Die erwartete Durchbiegung ist hier mit Δx1 bezeichnet. Weist der Flügel 5 einen Knick, oder beispielsweise auch einen Riss auf, der zur Schwächung der Struktur des Flügels 5 führt, kommt es hinter der Riss- oder Knickstelle zu einer verstärkten Durchbiegung 100. Eine solche beispielhafte Durchbiegungskurve ist gestrichelt eingezeichnet. Entsprechend ist das Verhältnis der Auslenkungen Δx2 hier größer. Wird anhand der Messdaten von der Recheneinrichtung festgestellt, dass eine solche anomale Durchbiegung dauerhaft vorliegt, beziehungsweise eine dauerhafte Abweichung von der Schar von Durchbiegungskurven eines intakten Flügels 5 vorliegt, kann beispielsweise eine Abschaltung der Windkraft-Anlage oder das Anfahren eines sicheren Zustands eingeleitet werden. Dieser sichere Zustand kann beispielsweise durch Neutralstellung der Flügel 5 erreicht werden, wobei der defekte Flügel 5 nach unten weist.

Durch die Anbringung von zwei Reflektorpaaren in der Tiefe des Flügels 5 kann die Biegung in zwei Distanzen gemessen werden. Dadurch ist es möglich, zu prüfen ob der Flügel 5 gleichmäßig durchgebogen ist, oder ob eine Knickstelle vorliegt, weil die beiden Punkte nicht mehr auf der von der Struktur her bekannten Krümmungskurve liegen.

Es ist gemäß einer weiteren Ausführungsform der Erfindung auch möglich, zusätzlich oder alternativ zu einer Positionsbestimmung von Markierungselementen eine Markierung in Form eines Codes vorzusehen, in welchen Ortsinformation codiert ist. Dies bietet unter anderem den Vorteil, dass die Deformation einer Trägerstruktur immer anhand der abgebildeten und decodierten Information, die sich auf die Bildmitte oder einen beliebigen anderen Referenzpunkt in der Bildebene bezieht, bestimmt werden kann. Damit werden Messfehler, die durch Verzeichnungen des Objektivs entstehen können, ausgeschaltet.

Demgemäß umfasst die Markierung einen Code, in welchem Ortsinformation der lokalen Position des Codes codiert ist, wobei die Recheneinrichtung dazu eingerichtet ist, den Code zu decodieren und damit den Ort des Blickfelds der Kamera festzustellen.

Bei der anhand der Fig. 1 bis 6 beschriebenen Messeinrichtung kann eine Verschiebung der Markierungen in allen Richtungen in der Bildebene, mithin also in zwei Dimensionen quer zur Blickrichtung der Kamera 9 erfasst und quantifiziert werden.

Die vorstehenden Ausführungsbeispiele beziehen sich auf den, beziehungsweise die Flügel 5 einer Windkraftanlage. Die Erfindung kann auch in entsprechender Weise für Flugzeugtragflächen eingesetzt werden. Hier bietet es sich an den Auftrieb mittels einer oder mehrerer Ruder und Klappen, wie etwa der Querruder und Spoiler oder Flaps zu regulieren.

Da eine Verformung der Tragfläche typischerweise einer Lageänderung des Flugzeugs vorausgeht, kann durch eine Regelungseinrichtung, welche die Klappen und/oder Ruder anhand der Messung der Durchbiegung und/oder Verwindung der Tragfläche steuert, unter anderem die Fluglage stabilisiert werden.

Auch im Flugzeugrumpf kann vorteilhaft eine erfindungsgemäße Messeinrichtung vorgesehen werden, um hier Belastungen der Trägerstruktur erkennen zu können.

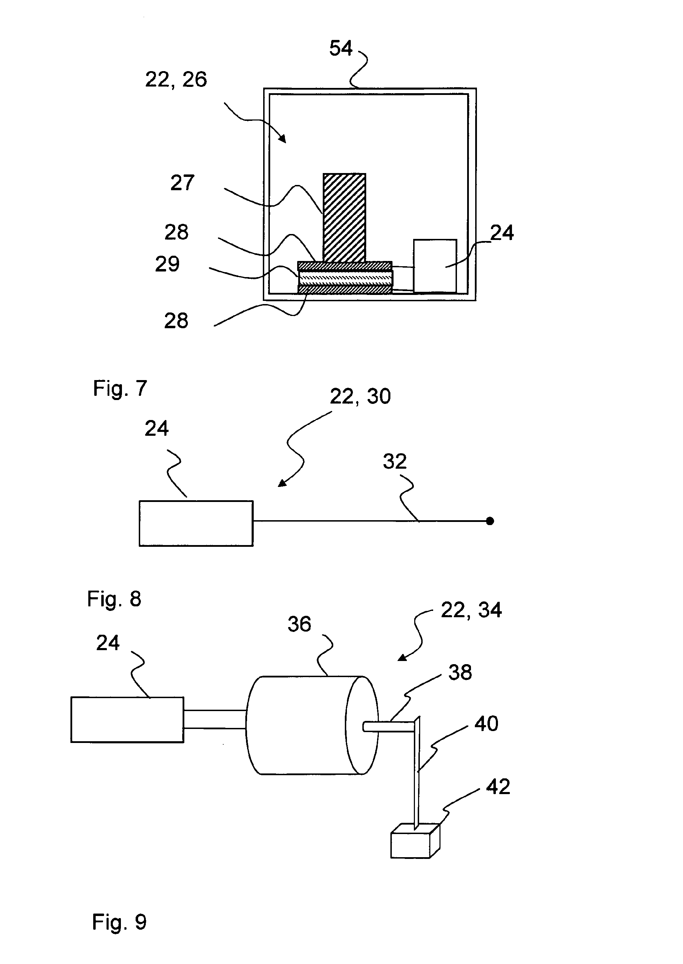

In den Fig. 7 bis 9 sind verschiedene Ausführungsbeispiele von autarken Generatoren 22 schematisch dargestellt. Vorzugsweise ist allgemein, ohne Beschränkung auf die in den Figuren dargestellten Ausführungsbeispiele aufgrund des autarken Generators 22 auch die gesamte Stromversorgung 20 autark. Gemäß einer anderen Weiterbildung kann der autarke Generator 22 aber auch zur Absicherung der Stromversorgung 20 vorgesehen sein, die dann elektrische Energie aus einer weiteren Quelle, insbesondere über elektrische Leitungen bezieht.

Fig. 7 zeigt einen autarken Generator 22, der einen piezoelektrischen Wandler 26 umfasst. Der piezoelektrische Wandler 26 umfasst ein piezoelektrisches Element 29, beispielsweise eine Piezokeramik. Das piezoelektrische Element 29 ist mit zwei Elektroden 28 zum Abgriff der Piezospannung versehen. Um Vibrationen des Flügels 5 auf den piezoelektrischen Wandler 26 zu übertragen, ist der piezoelektrische Wandler 26 im Inneren des Flügels 5, beispielsweise wie gezeigt in einem Holm 54, befestigt. Ein am Verbund des piezoelektrischen Elements 29 und den Elektroden 28 befestigtes Gewicht 27 sorgt aufgrund seiner Massenträgheit dafür, dass Vibrationen zu einer periodischen Kompression des piezoelektrischen Elements 29 und damit zu einer abgreifbaren, entsprechend den Vibrationen wechselnden Piezo-Spannung führen. Eine an die Elektroden 28 angeschlossene Schaltung 24 bereitet die Piezo-Spannung auf eine benutzbare Spannung, beispielsweise eine definierte Gleichspannung auf.

Fig. 8 zeigt ein Beispiel eines Wandlers 30 für elektromagnetische Wellen. Dieser Wandler 30 weist eine Antenne 32 auf. Die Schaltung 24 umfasst hier Verstärkerschaltung zur Verstärkung der über die Antenne 32 empfangenen Funk- oder Radiowellen und eine Gleichrichterschaltung.

In Fig. 9 ist ein Beispiel eines autarken Generators 22 mit einem dynamoelektrischen Wandler 34 dargestellt. Diese Bauform eignet sich besonders zum Einsatz in einem rotierenden Objekt, wie insbesondere einem Rotor einer Windturbine. Der dynamoelektrische Wandler 34 umfasst einen Drehgenerator 36 mit einer drehbaren Welle 38. An der Welle 38 ist ein Arm 40 mit einem Gewicht 42 vorgesehen. Wird der Drehgenerator 36 im Rotor 1 so montiert, dass die Welle 38 in Richtung der Rotationsachse des Rotors 1 weist, so wird die Drehung des Rotors 1 auf die Welle 38 übertragen. Der Arm 40 wird dabei durch die am Gewicht 42 angreifende Schwerkraft nach unten ausgerichtet, so dass sich der Drehgenerator 36 um die Welle 38 dreht. Der Drehgenerator 36 kann auf diese Weise dynamoelektrisch elektrische Energie erzeugen, die von der Schaltung 24 aufbereitet wird. Das Prinzip dieses Generators setzt voraus, dass die Fliehkraft am Montageort die Schwerkraft nicht überschreitet. Ist dies, beispielsweise an den Enden der Flügel 5 dennoch der Fall, können aber ebenso dynamoelektrische Generatoren verwendet werden, die entweder aus Vibrationen über ein bewegliches Trägheitselement Energie schöpfen oder aber ebenfalls über ein beispielsweise federnd bewegliches Trägheitselement Bewegungsenergie aus dem sich in Richtung und Größe durch Einwirkung der Schwerkraft ändernden Kraftvektor erzeugen und umsetzen.

Es ist dem Fachmann ersichtlich, dass die Erfindung nicht auf die vorstehend beschriebenen Ausführungsbeispiele beschränkt ist, sondern in vielfältiger Weise variiert werden kann. Insbesondere kann die Erfindung auch auf andere Trägerstrukturen und elastisch verformbare Objekte angewendet werden. Auch sind weitere Wandlertypen, als die oben beschriebenen gegebenenfalls einsetzbar. Ist die Trägerstruktur transparent oder transluzent, können beispielsweise auch photovoltaische Wandler verwendet werden.

### Bezugszeichenliste

- 1: Rotor
- 3: Nabe
- 4: Beleuchtungseinrichtung
- 5: Flügel
- 7,8: Markierung
- 9: Kamera
- 11: Objektiv
- 13: Längsachse
- 15: Leuchtmittel
- 20: Stromversorgung
- 22: Generator
- 23: Speicher
- 24: Schaltung
- 26: Wandler, piezoelektrische
- 27: Gewicht
- 28: Elektrode
- 29: Element, piezoelektrisch
- 30: Wandler für elektromagnetische Wellen
- 32: Antenne
- 34: Wandler, dynamoelektrisch
- 36: Drehgenerator
- 38: Welle, drehbar
- 40: Arm
- 42: Gewicht
- 51: Oberschale
- 52: Unterschale
- 54: Holm
- 56: Hohlraum
- 55,57: Zwischenräume
- 70: Referenzposition
- 91: Gehäuse
- 94: Kamerabild
- 100: Durchbiegung

## Patentansprüche

1. Einrichtung zur Messung von Verformungen eines elastisch verformbaren Objekts umfassend zumindest eine optisch erfassbare Markierung (7) an einer Längsposition (13) entlang des elastisch verformbaren Objekts (5), sowie zumindest eine elektronische Kamera (9) mit einem Objektiv (11) und einem Matrix-Sensor, wobei das Objektiv (11) der Kamera (9) auf die zumindest eine optisch erfassbare Markierung (7) gerichtet ist, wobei die Markierung (7) mittels einer Beleuchteinrichtung (4) beleuchtet wird oder mittels eines Leuchtmittels (15) selbstleuchtend ist, wobei für die Beleuchtungseinrichtung (4) oder für das Leuchtmittel (13) eine Stromversorgung (20) vorgesehen ist, die einen autarken Generator (22) umfasst, wobei der Generator (22) ausgeführt ist, Energie aus der Umgebung in elektrische Energie zu wandeln.

2. Einrichtung gemäß einem der vorstehenden Ansprüche, **dadurch gekennzeichnet, dass** ein Speicher (23) für elektrische Energie vorgesehen ist, vorzugsweise ein Akkumulator oder ein Kondensator.

3. Einrichtung gemäß einem der vorstehenden Ansprüche, **dadurch gekennzeichnet, dass** die Kamera (9) an einer von einer ersten Längsposition in Längsrichtung (13) des elastisch verformbaren Objekts (5) beabstandeten zweiten Längsposition angeordnet ist und die Markierung (7) vorzugsweise innerhalb eines Hohlraumes (56) des elastisch verformbaren Objekts (5) angeordnet ist.

4. Einrichtung gemäß einem der vorstehenden Ansprüche, **dadurch gekennzeichnet, dass** zumindest zwei entlang der Längsrichtung (13) des elastisch verformbaren Objekts (5) in unterschiedlichem Abstand von der Kamera beabstandete beleuchtete oder selbstleuchtende Markierungen (7) vorgesehen sind, wobei eine Recheneinrichtung eingerichtet ist, anhand eines Vergleichs der Positionen der beiden Markierungen (7) eine Längenänderung oder eine ungleichmäßige Deformation des elastisch verformbaren Objekts (5) zu ermitteln und zu quantifizieren.

5. Einrichtung gemäß einem der vorstehenden Ansprüche, **dadurch gekennzeichnet, dass** das elastisch verformbare Objekt als ein Flügel (5) einer Windkrafteinrichtung ausgeführt ist.

6. Einrichtung gemäß einem der vorstehenden Ansprüche, **dadurch gekennzeichnet, dass** ein Laser oder wenigstens eine LED als Beleuchtungseinrichtung (4) zur Beleuchtung der Markierung (7) vorgesehen ist, wobei der Laser oder die wenigstens eine LED parallel zur Betrachtungsrichtung der Kamera (9) auf die Markierung (7) ausgerichtet ist.

7. Einrichtung gemäß einem der vorstehenden Ansprüche, **dadurch gekennzeichnet, dass** der autarke Generator (22) zumindest eine der folgenden Einrichtungen umfasst:
- einen Wandler von Vibrationsenergie in elektrische Energie, vorzugsweise ein piezoelektrischer Wandler (26),
- einen Wandler elektromagnetischer Wellen (30), wie Funk- oder Radiowellen in elektrischen Strom, vorzugsweise mit einer an den Wandler angeschlossenen Antenne (32) zum Empfang der elektromagnetischen Wellen,
- einen dynamoelektrischen Wandler (34), vorzugsweise mit einem Trägheitselement (42) oder einem durch die Schwerkraft ausgerichteten Element.

8. Regeleinrichtung mit einer Einrichtung zur Messung von Verformungen gemäß einem der vorstehenden Ansprüche, **dadurch gekennzeichnet, dass** die Regeleinrichtung eine Stelleinrichtung mit zumindest einem Stellglied umfasst, mit welcher unter Ansprechen darauf, dass von der Recheneinrichtung eine Abweichung der Markierung (7) von einer Sollposition quantifiziert wurde, der elastischen Verformung entgegengewirkt wird.

9. Rotor einer Windkraftanlage gemäß einem der vorstehenden Ansprüche, **dadurch gekennzeichnet, dass** das Stellglied ein Stellglied zur Einstellung des Anstellwinkels umfasst, und wobei die Stelleinrichtung den Anstellwinkel des Flügels (5) ändert.

10. Verfahren zur Messung von Verformungen eines elastisch verformbaren Objekts (5) bei welchem zumindest eine optisch erfassbare Markierung (7) an einer Längsposition entlang des elastisch verformbaren Objekts (5), sowie zumindest eine elektronische Kamera (9) mit einem Objektiv (11) und einem Matrix-Sensor verwendet wird, wobei das Objektiv (11) der Kamera (9) auf die zumindest eine optisch erfassbare Markierung (7) gerichtet ist, wobei eine Beleuchtungseinrichtung (4) die Markierung (7) beleuchtet oder die Markierung (7) durch ein Leuchtmittel (15) selbst leuchtet und die Beleuchtungseinrichtung (4) oder das Leuchtmittel (15) mittels einer Stromversorgung (20) betrieben wird, wobei die elektrische Energie der Stromversorgung (20) mit einem autarken Generator (22) erzeugt wird, welcher Energie aus der Umgebung des Generators (22) in elektrische Energie wandelt.

11. Verfahren gemäß dem vorstehenden Anspruch, **dadurch gekennzeichnet, dass** die Verformung eines aerodynamischen Flügels (5) erfasst und quantifiziert wird und mittels zumindest eines Stellglieds in Abhängigkeit der Verformung der Anstellwinkel des Flügels (5) oder dessen Auftrieb verändert wird.

12. Verfahren gemäß den Ansprüchen 10 oder 11, **dadurch gekennzeichnet, dass** die Länge des optischen Pfades vom Matrix-Sensor zur Markierung (7) durch eine Laufzeit-Messung eines Lichtstrahls bestimmt wird.

13. Verfahren gemäß einem der vorstehenden Verfahrensansprüche, **dadurch gekennzeichnet, dass** die elektrische Energie im autarken Generator (22) mittels einer Wandlung von Vibrationsenergie in elektrische Energie, vorzugsweise mittels eines piezoelektrischen Wandlers (29) erfolgt.

14. Verfahren gemäß einem der vorstehenden Verfahrensansprüche, **dadurch gekennzeichnet, dass** die elektrische Energie im autarken Generator (22) mittels einer Wandlung elektromagnetischer Wellen, wie Funk- oder Radiowellen in elektrische Energie, vorzugsweise mit einer an den Wandler angeschlossenen Antenne (32) zum Empfang der elektromagnetischen Wellen erfolgt.

15. Verfahren gemäß einem der vorstehenden Verfahrensansprüche, **dadurch gekennzeichnet, dass** die elektrische Energie im autarken Generator (22) mittels einer dynamoelektrischen Wandlung, vorzugsweise mit einem Trägheitselement (27) oder einem durch die Schwerkraft ausgerichteten Element erzeugt wird.
